# EUROPÄISCHE PATENTSCHRIFT

(11) **EP 1 703 159 B1**
(45) Veröffentlichungstag und Bekanntmachung des Hinweises auf die Patenterteilung: **15.12.2010**
(21) Anmeldenummer: 06003543.3
(22) Anmeldetag: 22.02.2006
(51) Int. Cl.: F16D 13/72

(54) **Verfahren zum Kühlen einer flüssigkeitsgekühlten Reibungskupplung sowie flüssigkeitsgekühlte Reibungskupplung**
Method of cooling a fluid cooled clutch as well as a fluid cooled clutch
Procédé de refroidissement d'un embrayage humide et embrayage humide

(30) Priorität: 16.03.2005 DE 102005012034
(43) Veröffentlichungstag der Anmeldung: 20.09.2006
(73) Patentinhaber: Schaeffler Technologies GmbH & Co. KG, 91074 Herzogenaurach (DE)
(72) Erfinder: Arnold, Johannes, 77855 Achern (DE); Reik, Wolfgang, Dr., 77815 Bühl (DE); Agner, Ivo, 77815 Bühl (DE); Nöhl, Oliver, 77830 Bühlertal (DE)

(56) Entgegenhaltungen:
- DE-A1-102004 021 067
- DE-C- 754 096
- GB-A- 1 290 974
- US-A- 3 474 888
- US-A- 3 768 613

## Beschreibung

Die Erfindung betrifft ein Verfahren zum Kühlen einer flüssigkeitsgekühlten Reibungskupplung. Die Erfindung betrifft weiter eine flüssigkeitsgekühlte Reibungskupplung.

Die während des Schlupfes an Drehmoment übertragenden Lamellen bzw. Reibscheiben entstehende Wärme wird bei flüssigkeitsgekühlten Reibungskupplungen mittels Kühlflüssigkeit abgeführt. Diese Kühlflüssigkeit, die gleichzeitig zur Schmierung von Lagern der Kupplung oder auch eines Getriebes dienen kann, läuft in einem Kreislauf um, innerhalb dessen es einen Kühler durchströmt. Es ist zweckmäßig, die der Kupplung zugeführte und zwischen den Reibscheiben hindurchströmende Kühlflüssigkeitsmenge je nach Fahrzustand zu regeln. Während der Fahrt wird ein Mindestvolumenstrom benötigt, um die bei Schlupfregelung auftretende Wärme abzuführen. Beim Einkuppeln muss ein großer Volumenstrom vorhanden sein, da dabei eine große Wärmemenge anfällt. Beim Synchronisieren soll der Volumenstrom deutlich reduziert werden, um ein Restschleppmoment an den Kupplungslamellen bzw. Reibscheiben und somit an der entsprechenden Synchronisationseinheit zu vermeiden. Zusätzlich muss das Kühlflüssigkeitssystem in der Lage sein, nach dem Anlassen des Motors selbsttätig einen Kühlkreislauf in Gang zu setzen.

In der EP 11 74 633 A2, von der in den Oberbegriffen der unabhängigen Ansprüche ausgegangen wird, ist eine flüssigkeitsgekühlte Reibungskupplung bekannt, bei dem radial innerhalb der Lamellen bzw. Reibscheiben von einem getriebeseitigen Anschluss her Kühlflüssigkeit zugeführt wird, die nach radialem Durchströmen des Lamellenpakets zusammen mit der Innenseite des rotierenden Kupplungsgehäuses rotiert bzw. umläuft und von dort von feststehenden Schaufeln zunächst in axialer Richtung und dann radial einwärts abgeleitet wird und einem Ölsumpf eines sich an die Kupplung anschließenden Getriebes zugeführt wird. Auf diese Weise kann in den Innen- bzw. Nassraum der Kupplung eingeleitete Kühlflüssigkeit drucklos rückgeführt werden, so dass der Füllstand der Kühlflüssigkeit derart einstellbar ist, dass die Kupplungslamellen nicht permanent in Kühlflüssigkeit eintauchen und Schleppmomente vermieden werden. Die rückgeführte Kühlflüssigkeit wird mit Hilfe einer Pumpe umgepumpt und der Kupplung radial innerhalb der Reibscheiben wieder zugeführt.

Aus der deutschen Patentschrift DE 754 096 C ist eine Kühleinrichtung für Kraftfahrzeugkupplungen bekannt, bei der das flüssige Kühlmittel mit Hilfe eines Schöpfrohrs, das in den, beim Umlauf der Kupplung sich unter der Schleuderwirkung bildenden Ölring eintaucht, im Kreislauf durch die zu kühlenden Kupplungsteile gefördert wird. Die Kühleinrichtung zeichnet sich dadurch aus, dass das Schöpfrohr zur Erzielung der für die Förderwirkung erforderlichen Relativbewegung gegenüber dem Ölring an einen sich drehenden Teil der Kupplung um dessen Drehachse frei pendelnd aufgehängt und mit einer genügend großen Gewichtsmasse ausgestattet ist, um das Mitgenommenwerden zu verhindern.

Der Erfindung liegt die Aufgabe zugrunde, eine flüssigkeitsgekühlte Reibungskupplung bei guter Einstellbarkeit des Kühlflüssigkeitsstroms in ihrem Aufbau zu vereinfachen.

Eine erste Lösung dieser Aufgabe wird mit einem Verfahren zum Kühlen einer flüssigkeitsgekühlten Reibungskupplung erzielt, bei welchem die Kühlflüssigkeit radial innerhalb von in Drehmoment übertragenden Reibeingriff bringbaren Lamellen zugeführt, radial außerhalb der Lamellen abgeführt und nach Durchströmen eines Rückströmungspfades zumindest teilweise radial innerhalb der Lamellen wieder zugeführt wird, wobei zumindest ein Teil der radial außerhalb der Lamellen abgeführten Kühlflüssigkeit ohne Durchströmen einer das Druckniveau dieser Kühlflüssigkeit erhöhenden Pumpe radial innerhalb der Lamellen wieder zugeführt wird und wobei der Volumenstrom der radial außerhalb der Lamellen abgeführten und radial innerhalb der Lamellen wieder zugeführten Kühlflüssigkeit durch ein Kräftegleichgewicht zwischen einer Kraft, die von einem außerhalb der Lamellen rotierenden Kühlflüssigkeitsring auf ein in den Kühlflüssigkeitsring eintauchendes Schöpfrohr und der im Schöpfrohr auftretenden Impulskräfte, die durch die Umlenkung der Kühlflüssigkeit entstehen, ausgeübt wird, und einer das Schöpfrohr im Sinne einer Vergrößerung seiner Eintauchtiefe vorspannenden Kraft geregelt wird.

Gemäß dem erfindungsgemäßen Verfahren wird zumindest ein Teil der zwischen den Lamellen radial auswärts strömenden Kühlflüssigkeit dem Inneren der Kupplung radial innerhalb der Lamellen unter Nutzung der kinetischen Energie der Kühlflüssigkeit, sowie gegebenenfalls der Schwerkraft wieder zugeführt. Eine mit Fremdkraft angetriebene Pumpe ist auf diese Weise überflüssig. Der Volumenstrom der dem Inneren der Kupplung wieder zugeleiteten Kühlflüssigkeit kann durch unterschiedlichste Maßnahmen in einfacher Weise eingestellt werden, beispielsweise durch Verändern des Durchströmquerschnitts des Rückströmungspfades, Verändern der Größe einer Einlauföffnung des Ölströmungspfades usw. Es versteht sich, dass das erfindungsgemäße Verfahren bevorzugt bei solchen Reibungskupplungen anwendbar ist, deren Drehachse derart angeordnet ist, dass die kinetische Energie und die Schwerkraft zum Rückführen der Kühlflüssigkeit nutzbar sind, wobei die potentielle Energie im Verhältnis zur kinetischen Energie im Allgemeinen gering ist. Bei Kupplungen mit senkrechter Drehachse ist die potentielle Energie nicht nutzbar.

Vorteilhafterweise wird die ohne Durchströmen einer das Druckniveau erhöhenden Pumpe wieder zugeführte Kühlflüssigkeit einem radial außerhalb der Lamellen rotierenden Kühlflüssigkeitsring oberhalb der Lamellen entnommen.

Radial innerhalb der Lamellen kann zusätzlich Kühlflüssigkeit zugeführt werden, die von der längs des Rückströmungspfades strömenden Kühlflüssigkeit gefördert wird.

In einer Weiterbildung des erfindungsgemäßen Verfahrens wird an einer Berührungsstelle zwischen einem innerhalb eines Kupplungsgehäuses rotierenden Kühlflüssigkeitsring und einem in Umfangsrichtung im Wesentlichen unbeweglichen Bauteil ein Unterdruck erzeugt, durch den Kühlflüssigkeit angesaugt und dem Kühlflüssigkeitsring zugeführt wird.

Eine weitere Lösung der der Erfindung zugrunde liegenden Aufgabe wird mit einer flüssigkeitsgekühlten Reibungskupplung erzielt, enthaltend wenigstens eine mit einer Antriebswelle drehfest verbundene Lamelle, wenigstens eine mit einer Abtriebswelle drehfest verbundene Lamelle, welche Lamellen in gegenseitige Anlage pressbar sind und innerhalb eines mit der Antriebswelle drehfest verbundenen Kupplungsgehäuses angeordnet sind, eine Kühlflüssigkeitsrückführleitung, die von einem Bereich radial außerhalb der Lamellen zu einem Bereich radial innerhalb der Lamellen führt und Kühlflüssigkeit nach deren radialer Strömung längs der Lamellen von dem radial äußeren Bereich in den radial inneren Bereich rückführt, wobei ein Endbereich der Rückführleitung als ein Schöpfrohr mit einer Einlassöffnung ausgebildet ist, die radial außerhalb der Lamellen in einen zusammen mit dem Kupplungsgehäuse rotierenden Kühlflüssigkeitsring eintaucht und die Kühlflüssigkeit ohne Durchströmen einer durch Fremdkraft angetriebenen Pumpe in den Bereich radial innerhalb der Lamellen rückführt, wobei zur Einstellung des Volumenstroms das Schöpfrohr derart bewegbar ist, dass sich seine Eintauchtiefe in den Kühlflüssigkeitsring ändert

Die Einlassöffnung des Schöpfrohrs ist vorteilhafterweise etwa senkrecht über dem Zentrum der Kupplung angeordnet.

Dazu ist beispielsweise das Schöpfrohr um eine exzentrisch zur Achse des Kühlflüssigkeitsrings angeordnete Achse schwenkbar.

Zum Verschwenken des Schöpfrohrs ist beispielsweise ein Aktor vorgesehen, der mit dem Schöpfrohr direkt oder unter Zwischenanordnung einer Feder verbunden ist.

Vorteilhafterweise ist die vom Aktor auf das Schöpfrohr entgegen der Strömungsrichtung des Kühlflüssigkeitsrings aufbringbare Kraft einstellbar.

Das Schöpfrohr kann mit einem entgegen der Strömungsrichtung des Kühlflüssigkeitsrings radial einwärts gerichteten Flügel versehen sein.

Die Reibungskupplung ist beispielsweise derart ausgebildet, dass der Kühlflüssigkeitsring in einer mit dem Kupplungsgehäuse rotierenden, radial nach innen offenen ringförmigen Rinne mitrotiert.

Vorteilhafterweise wird aus der Rinne überlaufende Kühlflüssigkeit von wenigstens einer radial außerhalb der Rinne angeordneten Schaufel einem außerhalb der Kupplung befindlichen Kühlflüssigkeitsvorrat zugeleitet.

Die Rückführleitung führt vorteilhaft durch eine Temperiereinrichtung zum Temperieren der Flüssigkeit.

Bevorzugt ist weiter, dass die Rückführleitung durch eine Saugstrahlpumpe führt, deren Saugeinlass mit einem Kühlflüssigkeitsvorrat verbunden ist.

Eine Weiterbildung der erfindungsgemäßen Reibungskupplung besteht darin, dass an einer radial inneren Fläche des Kühlflüssigkeitsrings ein Strömungsabtastbauteil anliegt, das mit einer Öffnung ausgebildet ist, an welche eine mit einem außerhalb der Kupplung angeordneten Flüssigkeitsvorrat verbundene Nachfüllleitung angeschlossen ist.

Die Nachfüllleitung verläuft vorteilhaft zwischen der in dem Strömungsabtastbauteil ausgebildeten Öffnung und dem Flüssigkeitsvorrat in Form eines umgekehrten U.

Das Strömungsabastbauteil kann elastisch in Richtung auf den Flüssigkeitsring derart vorgespannt sein, dass es auf dessen Oberfläche schwimmt und nicht in ihm versinkt.

Weiter ist es vorteilhaft, das Strömungsabtastbauteil derart auszubilden, dass es eine an den Kühlflüssigkeitsring tangential anliegende Fläche aufweist und an seinem der Strömung entgegen gerichteten Ende vom Kühlflüssigkeitsring weg gebogen ist, so dass es auf dem Kühlflüssigkeitsring aufschwimmt.

Vorteilhaft ist, wenn das den Kühlflüssigkeitsring berührende Ende der Leitung im Betrieb nahezu senkrecht zur Oberfläche des rotierenden Kühlflüssigkeitsring steht.

Die Erfindung wird im Folgenden beispielsweise und mit weiteren Einzelheiten anhand von Figuren erläutert, in denen darstellen:
Figur 1 einen schematischen Längsschnitt durch eine flüssigkeitsgekühlte Reibungskupplung,
Figur 2 eine schematische Querschnittsansicht einer erfindungsgemäßen Reibungskupplung,
Figur 3 einen Ausschnitt der Figur 2 zur Erläuterung der Einstellung eines Schöpfrohrs,
Figur 4 einen Ausschnitt der Figur 2 zur Erläuterung einer Initialisierungsvorrichtung,
Figur 5 eine Ansicht ähnlich der Figur 1 mit Kühlflüssigkeitsstand bei stehendem Motor,
Figur 6 die Ansicht der Figur 5 bei schräg stehendem Fahrzeug,
Figur 7 eine abgeänderte Ausführungsform eines Schöpfrohrs, und
Figur 8 eine Ansicht ähnlich der Figur 5 einer abgeänderten Ausführungsform einer Initialisierungsvorrichtung.

Die Erfindung wird im Folgenden anhand einer Doppelkupplung erläutert, wie sie für Parallelschaltgetriebe verwendet wird. Es versteht sich, dass die Erfindung auch für andere Arten von Reibungskupplungen mit beispielsweise nur einer Kupplungseinheit verwendet werden kann.

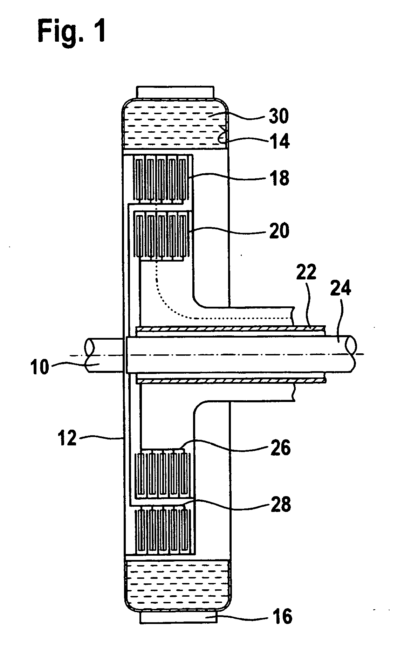

Gemäß Figur 1 ist eine von einem nicht dargestellten Motor angetriebene Antriebswelle 10 starr mit einem Kupplungsgehäuse 12 verbunden, das radial außen in einer radial nach innen offenen, insgesamt kreisförmigen Rinne 14 endet. Die radial äußere Seite der Rinne 14 ist mit Schaufeln 16 versehen. Mit dem Kupplungsgehäuse 12 ist über einen Träger ein radial äußeres Lamellenpaket 18 und ein radial inneres Lamellenpaket 20 drehfest verbunden. An dem Kupplungsgehäuse 12 bzw. dem starr mit diesem verbundenen Träger der Lamellenpakete 18 und 20 ist eine hohle Abtriebswelle 22 gelagert, in der koaxial zu ihr eine weitere Abtriebswelle 24 gelagert ist. Mit der äußeren Abtriebswelle 22 ist über einen Träger drehfest ein radial inneres Lamellenpaket 26 verbunden. Mit der inneren Abtriebswelle 24 ist über einen Träger drehfest ein radial äußeres Lamellenpaket 28 verbunden.

Die radial äußeren Lamellenpakete 18 und 28 können in an sich bekannter Weise über eine nicht dargestellte Betätigungseinrichtung in gegenseitigen Reibeingriff gebracht werden. Die radial inneren Lamellenpakete 20 und 26 können über eine weitere Betätigungseinrichtung in gegenseitigen Reibeingriff gebracht werden. Zwischen den Lamellenpaketen angeordnete Reibbeläge, die mit jeweils einer Lamelle starr verbunden sein können, sind der Einfachheit halber nicht dargestellt.

Die mit den vier ringförmigen Lamellenpaketen bzw. Reibscheibensätzen ausgebildete Kupplung gemäß Figur 1 bildet eine Doppelkupplung, mit der wahlweise die Antriebswelle 10 mit der Antriebswelle 22 oder der Antriebswelle 24 (oder mit beiden Antriebswellen) in Drehmoment übertragenden Reibeingriff gebracht werden kann.

Während der Schlupfphasen zwischen den kupplungsgehäusefesten Lamellenpaketen 18 bzw. 20 und den abtriebswellenfesten Lamellenpaketen 26 bzw. 28 entsteht in der Kupplung Reibungswärme, die abgeführt werden muss. Dazu wird dem Inneren des Kupplungsgehäuses 12, das gemäß Figur 1 rechtsseitig durch eine nicht dargestellte ortsfeste Wand beispielsweise eines Getriebegehäuses flüssigkeitsdicht abgeschlossen ist, punktiert dargestellte Kühlflüssigkeit zugeführt, die in Folge der Fliehkraft die Lamellenpakete mit radialer Komponente durchströmt und innerhalb der Rinne 14 zusammen mit dieser bzw. dem Kupplungsgehäuse als ein Kühlflüssigkeitsring 30 rotiert.

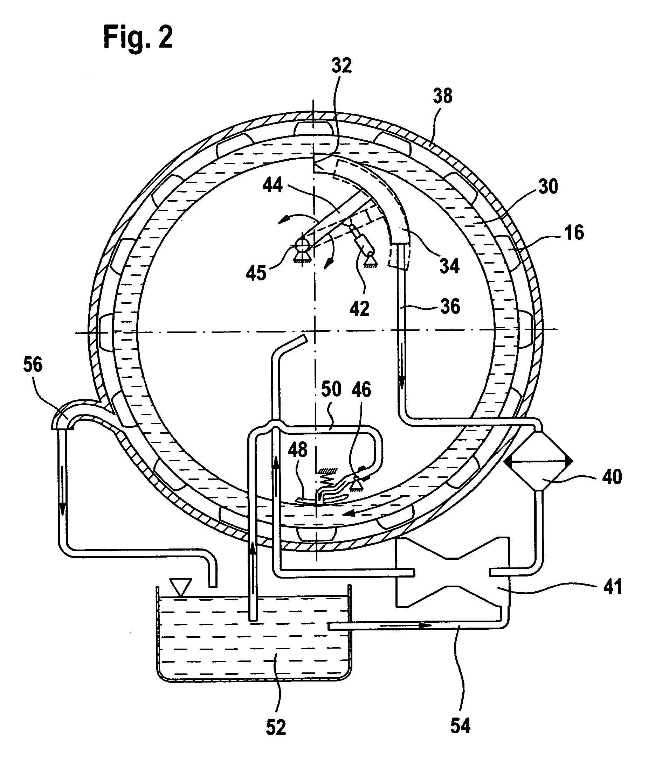

Anhand der Figur 2 wird erläutert, wie die Kühlflüssigkeit geführt und gesteuert wird.

Gemäß Figur 2 taucht in den Kühlflüssigkeitsring 30 die entgegen der Strömungsrichtung (durch einen Pfeil angedeutet) des Kühlflüssigkeitsrings 30 gerichtete Einlassöffnung 32 eines Schöpfrohrs 34 ein, das auslassseitig mit einer Leitung 36 verbunden ist. Die Leitung 36 führt durch ein ortsfestes, die Kupplung aufnehmendes Gehäuse 38, das beispielsweise einteilig mit einem Getriebegehäuse ausgebildet ist, hindurch durch eine Temperiervorrichtung 40 und eine Saugstrahlpumpe 41 und dann wiederum durch das Gehäuse 38 hindurch und mündet in einem zentralen Bereich des Innenraums des Kupplungsgehäuses 12 (Figur 1) innerhalb der Lamellenpakete. Die Leitung 36 bildet somit einen Rückströmungs- bzw. Umlaufströmungspfad, durch den dem Nassraum der Kupplung radial außen aus der Rinne 14 entnommene Kühlflüssigkeit radial innen unmittelbar wieder zugeführt wird. Die Einlassöffnung 32 ist bevorzugt, etwa im Bereich des oberen Scheitelpunktes des Kühlflüssigkeitsrings 30 angeordnet. Sie kann jedoch auch an anderen Stellen des Umlaufs des Kühlflüssigkeitsrings angeordnet sein.

Die Eintauchtiefe der Einlassöffnung 32 in den Kühlflüssigkeitsring 30 ist mit Hilfe eines Aktors 42 verstellbar, der die Drehstellung eines starr mit dem Schöpfrohr 34 verbundenen Arms 44 verändert, der um eine Achse 45 schwenkbar ist. Die Position der Achse 45 ist derart exzentrisch zu der Achse des Flüssigkeitsrings 30, dass sich die Tiefe, mit der das Schöpfrohr 34 in den Flüssigkeitsring 30 eintaucht, bei einer Verschwenkung des Arms 44 und damit des Schöpfrohrs 34 ändert.

Mit Hilfe des Schöpfrohres wird somit eine Umlaufströmung erzeugt, deren Energiequelle der rotierende Kühlflüssigkeitsring und die Höhendifferenz zwischen Einlassöffnung des Schöpfrohrs und der Mündung der Leitung 36 in das Innere der Kupplung ist.

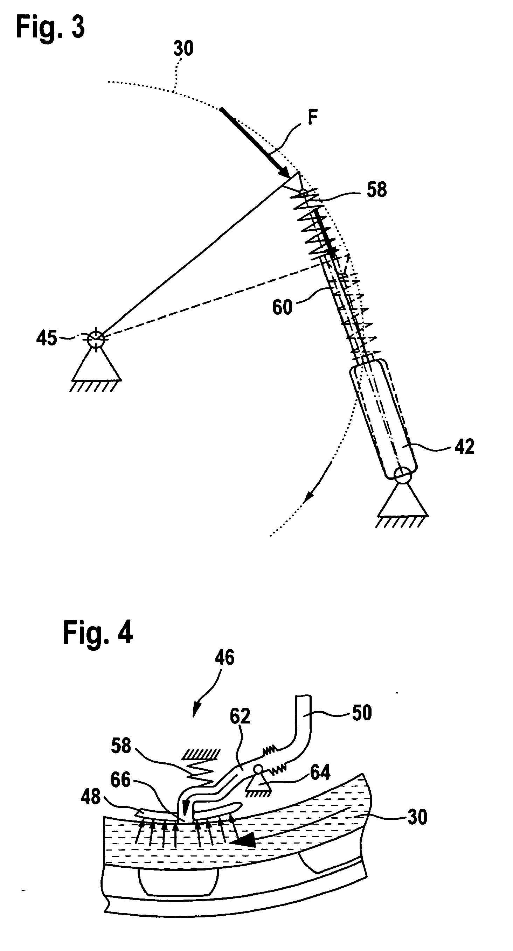

Um dem einen Nassraum bildenden Inneren des Kupplungsgehäuses 12 Kühlflüssigkeit zuzuführen, ist eine Initialisierungsvorrichtung 46 vorgesehen, die eine anhand der Figur 4 im Weiteren beschriebene Anlageplatte 48 aufweist, die an der Innenseite des Kühlflüssigkeitsrings 30 anliegt und eine Öffnung hat, die über eine Leitung 50 mit einem Kühlflüssigkeitsvorrat 52 verbunden ist, beispielsweise dem Ölsumpf eines Getriebes. Aus dem Kühlflüssigkeitsvorrat 52 heraus führt eine weitere Leitung 54 zu einem Sauganschluss der Saugstrahlpumpe 41.

Die an der radialen Außenseite der Rinne 14 angebrachten Schaufeln 16 dienen dazu, überschüssige Flüssigkeit, die über den einwärts gerichteten Rand der Rinne 14 überläuft und sich an der Innenseite des Gehäuses 38 sammelt, mitzunehmen und durch einen Auslass 56 hindurch dem Flüssigkeitsvorrat 52 zuzuführen.

Im Folgenden wird anhand der Figur 3 der Mechanismus zum Verstellen des Schöpfrohrs 34 erläutert. Das Schöpfrohr 34 bzw. dessen Arm 44 ist um die Achse 45 schwenkbar gelagert. An dem Schöpfrohr greift eine Druckfeder 58 vorzugsweise gelenkig an, die mit einer Schubstange 60 des Aktors 42 verbunden ist. Der Aktor 42 ist vorzugsweise derart ausgebildet, dass die Kraft, die die Schubstange 60 einer Bewegung in Richtung der Rotation des Kühlflüssigkeitsrings 30 entgegensetzt, einstellbar ist, beispielsweise als ein Elektromagnet, dessen Magnetstößel mit einer von der Stromstärke durch den Elektromagneten abhängigen Kraft beaufschlagbar ist. Die von dem Kühlflüssigkeitsring 30 auf das Schöpfrohr 34 aufgebrachte Kraft F ist jeweils im Gleichgewicht mit der vom Aktor her auf dessen Schubstange 60 wirkende Kraft, wobei die Druckfeder 58 dazu dient, Drehmomentschwankungen am Schöpfrohr auszugleichen. Bei Kenntnis des Schöpfrohrkennfeldes (Schöpfrohrkraft F abhängig von der Rotationsdrehzahl des Flüssigkeitsringes 30 und der Temperatur der Kühlflüssigkeit) kann die entsprechende Gegenkraft des Aktors 42 eingestellt werden. Die Schöpfrohrkraft wiederum entspricht dem vom Schöpfrohr aus dem Flüssigkeitsring abgeleiteten Volumenstrom der Kühlflüssigkeit, der somit ohne eine Wegmessung eingestellt werden kann.

Anhand der Figur 4 wird im Folgenden die Initialisierungsvorrichtung 46 erläutert, die dazu dient, die Rinne 14 mit Kühlflüssigkeit zu füllen, sobald die Antriebswelle 10 dreht.

Gemäß Figur 4 ist die Leitung 50 mit einem in sich verhältnismäßig starren Rohrabschnitt 62 verbunden, der mittels eines Lagers 64 schwenkbar gelagert ist und mit einer Öffnung 66 verbunden ist, die in der wasserskiartig ausgebildeten Anlageplatte 48 vorgesehen ist. Die entgegen der Strömungsrichtung des Flüssigkeitsrings 30 etwas aufgebogene Anlageplatte 48 wird mittels einer Feder 58 in Anlage an die Oberfläche des Flüssigkeitsrings 30 gedrückt. Die Anlageplatte 48 liegt vorteilhafterweise an der Innenseite des Kühlflüssigkeitsrings 30 im Bereich von dessen unterem Scheitelpunkt an.

Sobald der Flüssigkeitsring 30 rotiert, entsteht wegen der Strömungsgeschwindigkeit der Kühlflüssigkeit längs der Anlageplatte 48 in deren Öffnung 66 ein Unterdruck, der Kühlflüssigkeit aus dem Kühlflüssigkeitsvorrat 52 ansaugt und den Kühlflüssigkeitsring 30 einleitet. Auf diese Weise ist gewährleistet, dass sich die Rinne 14 beim Anlaufen des Motors rasch mit Kühlflüssigkeit füllt. Zusätzlich ist ein ständiger Austausch der Kühlflüssigkeit gewährleistet, indem über die Rinne überlaufende Kühlflüssigkeit durch den Auslass 56 herausgeführt und dem Kühlflüssigkeitsvorrat 52 zugeleitet wird.

Die Saugstrahlpumpe 41 tritt in Tätigkeit, sobald die vom Schöpfrohr abgezweigte Volumenströmung ein gewisses Maß übersteigt.

Die Temperiervorrichtung 40 kann während des Normalbetriebs zum Kühlen der Kühlflüssigkeit verwendet werden, oder aber, bei noch kaltem System, zum raschen Aufheizen der Kühlflüssigkeit auf Betriebstemperatur.

Im Folgenden werden verschiedene Fahrzustände beschrieben:

### a) Initialisierung

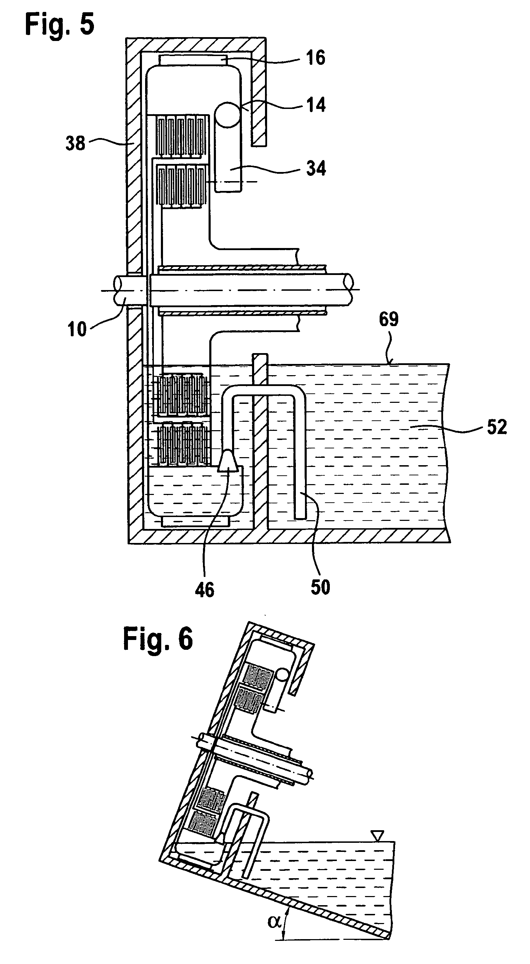

Bei stehendem Fahrzeug gleicht sich gemäß Figur 5 der Flüssigkeitspegel 68 zwischen dem Kühlflüssigkeitsvorrat 52, beispielsweise dem Ölpegel im Getriebe, aufgrund der vollständig in die Kühlflüssigkeit eintauchenden, in Form eines umgekehrten U ausgebildeten Leitung 50 aus. Die Kühlflüssigkeitsmenge bildet nach dem Anlaufen des Motors bzw. der Antriebswelle 10 einen zusammen mit der Rinne 14 rotierenden Kühlflüssigkeitsring. Überschüssiges Öl wird durch die Schaufeln 16 aus dem Kupplungsgehäuse bzw. der Kupplungsglocke heraus geschaufelt und über den Auslass 56, der vorzugsweise als Abstreifer ausgebildet ist, in den Kühlflüssigkeitsvorrat 52 rückgefördert.

Wenn das Fahrzeug schief steht (Neigungswinkel α gemäß Figur 6), befindet sich innerhalb der Kupplung unter Umständen weniger Öl, das jedoch rasch durch die geschilderte Wirkung der Initialisierungsvorrichtung 46 ergänzt wird, bis das Schöpfrohr 34 arbeiten kann.

Es versteht sich, dass die Leitung 50 zusammen mit den anderen Bauteilen derart ausgebildet und positioniert ist, dass auch bei Schräglage des Fahrzeugs die Initialisierungsvorrichtung 46 Kühlflüssigkeit aus dem Flüssigkeitsvorrat 52 ansaugen kann.

### b) Fahren

Das Schöpfrohr 34 wird von dem Aktor 42 derart in den Kühlflüssigkeitsring 30 eingetaucht, dass ein vorbestimmter, verhältnismäßig geringer Volumenstrom abgeschöpft wird, der so klein ist, dass die Saugstrahlpumpe 41 nicht in Tätigkeit tritt. Der abgeschöpfte Volumenstrom wird in der vorzugsweise als Kühler ausgebildeten Temperiervorrichtung 40 gekühlt und der Kupplung wiederum zugeführt. Über den Ölaustauschmechanismus der Initialisierungsvorrichtung 46 findet ein ständiger Flüssigkeitsaustausch mit dem Flüssigkeitsvorrat 52 statt. Aus der Rinne 14 überlaufende Kühlflüssigkeit, vorzugsweise Getriebeöl, wird von den Schaufeln 30 in den Flüssigkeitsvorrat 52 rückgeführt.

Bei Drehzahländerungen des Motors kann mit Hilfe des im Steuergerät hinterlegten Kennfelds des Schöpfrohrs die Kraft des Aktors 42 so eingestellt werden, dass der abgeschöpfte Volumenstrom konstant bleibt. In Weiterbildungen der Erfindung kann davon gedacht werden, einen Selbstreguliereffekt zu nutzen, da eine steigende Rotationsgeschwindigkeit des Flüssigkeitsrings 30 zu einer erhöhten, auf das Schöpfrohr 34 wirkenden Kraft führt, so dass sich dieses selbsttätig in Richtung einer verminderten Eintauchtiefe bewegt.

### c) Anfahren bzw. starker Schlupf

Das Schöpfrohr 34 wird durch Vergrößerung der Aktorkraft tiefer in den Kühlflüssigkeitsring 30 eingetaucht, so dass der abgeschöpfte Volumenstrom zunimmt, der nach Durchströmen des Kühlers 49 gekühlt durch die Saugstrahlpumpe 41 strömt, die in Folge der größeren Volumenströmung in Tätigkeit tritt, so dass der Kupplung zusätzliche Kühlflüssigkeit zugeführt wird, die die Lamellenpakete kühlt. Der Kühlvolumenstrom kann beispielsweise abhängig von der Temperatur der Kühlflüssigkeit stromabwärts des Schöpfrohrs 34 eingestellt werden, so dass eine Kopplung der Steuerung des Aktors direkt an ein Getriebesteuergerät nicht zwingend erforderlich ist. Die Saugstrahlpumpe 41 hat durch den Selbstverstärkungseffekt die Wirkung, dass die erforderliche Kühlflüssigkeitsmenge für die Kupplung rasch bereitgestellt ist.

### d) Synchronisieren

Im Zustand Synchronisieren (Kupplung auf) wird die Aktorkraft stark reduziert. Das Schöpfrohr 34 dreht sich rasch so weit aus dem Flüssigkeitsring 30 heraus, dass nur noch eine stark reduzierte Kühlflüssigkeit gefördert wird. In Folge der Strömungsgeschwindigkeit in den Leitungen setzt diese Reduzierung der Strömung sehr rasch ein und das Synchronisieren kann weitgehend ohne Beeinträchtigung durch die Kühlflüssigkeitsströmung erfolgen.

Es versteht sich, dass der Aktor 42 vorteilhaft unmittelbar an ein Kupplungs- bzw. Getriebesteuergerät angeschlossen ist und von dorther entsprechend den Kupplungsbetätigungen angesteuert wird.

Das beschriebene System kann in vielfältiger Weise abgeändert werden.

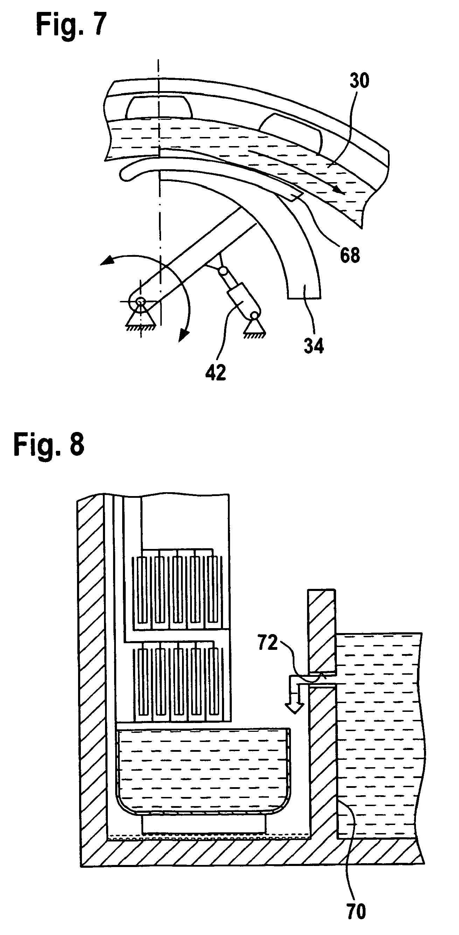

Beispielsweise zeigt Figur 7 eine Ausführungsform, bei der das Schöpfrohr 34 mit einem vorzugsweise starr mit ihm verbundenen Flügel 68 versehen ist, der entgegen der Rotationsrichtung des Kühlflüssigkeitsrings 30 radial einwärts gebogen ist. Dieser Flügel setzt einem tieferen Eintauchen des Schöpfrohrs in die Strömung einen zusätzlichen Widerstand entgegen, so dass Betriebspunkte besser definiert werden können, d.h. z.B. einer Berührung der Flüssigkeitsoberfläche durch den Flügel ein bestimmter Betriebszustand bzw. Kühlflüssigkeitsvolumenstrom zugeordnet werden kann. Auch durch die Formgebung der Einlassöffnung des Schöpfrohrs 34 kann dessen Kennlinie bzw. Kennfeld verändert werden.

Der Aktor 42 zum Einstellen der Eintauchtiefe des Schöpfrohrs 34 sowie die Verstellgeometrie des Schöpfrohrs 34 können in unterschiedlichster Weise ausgebildet sein. Die Kraft kann durch einen Hydraulik- oder Pneumatikzylinder mit langhubiger Feder oder einen nicht selbsthemmenden Elektromotor mit einstellbarem Drehmoment eingestellt werden. Es sind auch Wegsteuerungen mittels unterschiedlichster Antriebsmechanismen, wie Spindel- oder Kurvenantrieben möglich, wobei die Regelstrategie jeweils entsprechend angepasst werden muss. Das Schöpfrohr kann linear senkrecht zur Ringströmung oder tangential zu ihr bewegt werden. Wichtig ist, dass der wirksame Einlassquerschnitt einer in den Kühlflüssigkeitsring eintauchenden Öffnung veränderbar ist. Es ist auch denkbar, die Dicke bzw. Tiefe des Kühlflüssigkeitsrings durch Manipulation an der Rinne, beispielsweise einer Veränderung einer Überlauföffnung, zu verändern. Die Rinne bildet vorteilhafterweise den Außenrand des Kupplungsgehäuses. Sie kann aber auch als gesondertes, am Kupplungsgehäuse oder einem Lamellenträger befestigtes Bauteil ausgebildet sein.

Die Initialisierungsvorrichtung 46 muss nicht zwingend die beschriebenen beweglichen Bauteile enthalten. Sie kann auch durch ein feststehendes Rohr bzw. einer durch eine Trennwand 70 hindurchführende Öffnung 72, die mit einer nicht dargestellten Vorrichtung zur Veränderung des Öffnungsquerschnittes ausgestattet sein kann (Fig. 8) gebildet sein, das nach dem Prinzip kommunizierender Röhren arbeitet und bestrebt ist, ständig einen Flüssigkeitspegelausgleich zwischen Kupplung und Getriebe herzustellen.

### Bezugszeichenliste

- 10: Antriebswelle
- 12: Kupplungsgehäuse
- 14: Rinne
- 16: Schaufel
- 18: Lamellenpaket
- 20: Lamellenpaket
- 22: Abtriebswelle
- 24: Abtriebswelle
- 26: Lamellenpaket
- 28: Lamellenpaket
- 30: Kühlflüssigkeitsring
- 32: Einlassöffnung
- 34: Schöpfrohr
- 36: Leitung
- 38: Gehäuse
- 40: Temperiervorrichtung
- 41: Saugstrahlpumpe
- 42: Aktor
- 44: Arm
- 45: Achse
- 46: Initialisierungsvorrichtung
- 48: Anlageplatte
- 50: Leitung
- 52: Flüssigkeitsvorrat
- 54: Leitung
- 56: Auslass
- 58: Druckfeder
- 60: Schubstange
- 62: Rohrabschnitt
- 64: Lager
- 66: Öffnung
- 68: Flügel
- 70: Rohr

## Patentansprüche

1. Verfahren zum Kühlen einer flüssigkeitsgekühlten Reibungskupplung, bei welchem Verfahren die Kühlflüssigkeit radial innerhalb von in Drehmoment übertragenden Reibeingriff bringbaren Lamellen (18, 20, 26, 28) zugeführt, radial außerhalb der Lamellen abgeführt und nach Durchströmen eines Rückströmungspfades (36, 40, 41) zumindest teilweise radial innerhalb der Lamellen wieder zugeführt wird,
wobei
zumindest ein Teil der radial außerhalb der Lamellen (18, 20, 26, 28) abgeführten Kühlflüssigkeit ohne Durchströmen einer das Druckniveau dieser Kühlflüssigkeit erhöhenden Pumpe radial innerhalb der Lamellen wieder zugeführt wird, **dadurch gekennzeichnet, dass** der Volumenstrom der radial außerhalb der Lamellen (18, 20, 26, 28) abgeführten und radial innerhalb der Lamellen wieder zugeführten Kühlflüssigkeit durch ein Kräftegleichgewicht zwischen einer Kraft, die von einem außerhalb der Lamellen rotierenden Kühlflüssigkeitsring (30) auf ein in den Kühlflüssigkeitsring eintauchendes Schöpfrohr (34) ausgeübt wird, und einer das Schöpfrohr im Sinne einer Vergrößerung seiner Eintauchtiefe vorspannenden Kraft geregelt wird.

2. Verfahren nach Anspruch 1, **dadurch gekennzeichnet, dass** die ohne Durchströmen einer das Druckniveau erhöhenden Pumpe wieder zugeführte Kühlflüssigkeit einem radial außerhalb der Lamellen (18, 20, 26, 28) rotierenden Kühlflüssigkeitsring (30) oberhalb der Lamellen entnommen wird.

3. Verfahren nach einem der Ansprüche 1 oder 2, **dadurch gekennzeichnet, dass** radial innerhalb der Lamellen (18, 20, 26, 28) zusätzliche Kühlflüssigkeit zugeführt wird, die von der längs des Rückströmungspfades (36, 40, 41) strömenden Kühlflüssigkeit gefördert wird.

4. Verfahren nach einem der Ansprüche 1 bis 3, **dadurch gekennzeichnet, dass** an einer Berührungsstelle zwischen einem innerhalb eines Kupplungsgehäuses (12) rotierenden Kühlflüssigkeitsring (30) und einem in Umfangsrichtung im Wesentlichen unbeweglichen Bauteil (48) ein Unterdruck erzeugt wird, durch den Kühlflüssigkeit angesaugt und dem Kühlflüssigkeitsring zugeführt wird.

5. Flüssigkeitsgekühlte Reibungskupplung, enthaltend
wenigstens eine mit einer Antriebswelle (10) drehfest verbundene Lamelle (18, 20),
wenigstens eine mit einer Abtriebswelle (22, 24) drehfest verbundene Lamelle (26, 28), welche Lamellen in gegenseitige Anlage pressbar sind und innerhalb eines mit der Antriebswelle drehfest verbundenen Kupplungsgehäuses (12) angeordnet sind,
eine Kühlflüssigkeitsrückführleitung (36), die von einem Bereich radial außerhalb der Lamellen zu einem Bereich radial innerhalb der Lamellen führt und Kühlflüssigkeit nach deren radialer Strömung längs der Lamellen, von dem radial äußeren Bereich in den radial inneren Bereich rückführt,
wobei ein Endbereich der Rückführleitung (36) als ein Schöpfrohr (34) mit einer Einlassöffnung ausgebildet ist, die radial außerhalb der Lamellen (18, 20, 26, 28) in einen zusammen mit dem Kupplungsgehäuse (12) rotierenden Kühlflüssigkeitsring (30) eintaucht und die Kühlflüssigkeit ohne Durchströmen einer durch Fremdkraft angetriebenen Pumpe in den Bereich radial innerhalb der Lamellen rückführt, **dadurch gekennzeichnet, dass** das Schöpfrohr (34) derart bewegbar ist, dass sich seine Eintauchtiefe in den Kühlflüssigkeitsring (30) ändert.

6. Reibungskupplung nach Anspruch 5, **dadurch gekennzeichnet, dass** die Einlassöffnung des Schöpfrohrs (34) etwa senkrecht über dem Zentrum der Kupplung angeordnet ist.

7. Reibungskupplung nach einem der Ansprüche 5 oder 6, **dadurch gekennzeichnet, dass** das Schöpfrohr (34) um eine exzentrisch zur Achse des Kühlflüssigkeitsrings (30) angeordnete Achse (45) schwenkbar ist.

8. Reibungskupplung nach Anspruch 5 oder 7, **dadurch gekennzeichnet, dass** zum Verschwenken des Schöpfrohrs (34) ein Aktor (43) vorgesehen ist, der mit dem Schöpfrohr unter Zwischenanordnung einer Feder (58) verbunden ist.

9. Reibungskupplung nach Anspruch 8, **dadurch gekennzeichnet, dass** die vom Aktor (43) auf das Schöpfrohr (34) entgegen der Strömungsrichtung des Kühlflüssigkeitsrings (30) aufbringbare Kraft einstellbar ist.

10. Reibungskupplung nach einem der Ansprüche 5 bis 8, **dadurch gekennzeichnet, dass** das Schöpfrohr (34) mit einem entgegen der Strömungsrichtung des Kühlflüssigkeitsrings (30) radial einwärts gerichteten Flügel (68) versehen ist.

11. Reibungskupplung nach einem der Ansprüche 5 bis 10, **dadurch gekennzeichnet, dass** der Kühlflüssigkeitsring (30) in einer mit dem Kupplungsgehäuse (12) rotierenden, radial nach innen offenen ringförmigen Rinne (14) mitrotiert.

12. Reibungskupplung nach Anspruch 11, **dadurch gekennzeichnet, dass** aus der Rinne (14) überlaufende Kühlflüssigkeit von wenigstens einer radial außerhalb der Rinne angeordneten Schaufel (16) einem außerhalb der Kupplung befindlichen Kühlflüssigkeitsvorrat (12) zugeleitet wird.

13. Reibungskupplung nach einem der Ansprüche 5 bis 12, **dadurch gekennzeichnet, dass** die Rückführleitung (36) durch eine Temperiereinrichtung (40) zum Temperieren der Flüssigkeit führt.

14. Reibungskupplung nach einem der Ansprüche 5 bis 13, **dadurch gekennzeichnet, dass** die Rückführleitung (36) durch eine Saugstrahlpumpe (41) führt, deren Saugeinlass mit einem Kühlflüssigkeitsvorrat (52) verbunden ist.

15. Reibungskupplung nach einem der Ansprüche 5 bis 14, **dadurch gekennzeichnet, dass** an einer radial inneren Fläche des Kühlflüssigkeitsrings (30) ein Strömungsabtastbauteil (48) anliegt, das mit einer Öffnung (66) ausgebildet ist, an welche eine mit einem außerhalb der Kupplung angeordneten Flüssigkeitsvorrat (52) verbundene Nachfüllleitung (50) angeschlossen ist.

16. Reibungskupplung nach Anspruch 15, **dadurch gekennzeichnet, dass** die Nachfüllleitung (50) zwischen der in dem Strömungsabtastbauteil (48) ausgebildeten Öffnung (66) und dem Flüssigkeitsvorrat (52) in Form eines umgekehrten U verläuft.

17. Reibungskupplung nach Anspruch 15 oder 16, **dadurch gekennzeichnet, dass** das Strömungsabtastbauteil (48) in Richtung auf den Kühlflüssigkeitsring (30) vorgespannt ist, dass auf dessen Oberfläche aufschwimmt und nicht in ihm versinkt.

18. Reibungskupplung nach einem der Ansprüche 15 bis 17, **dadurch gekennzeichnet, dass** das Strömungsabtastbauteil (48) eine an dem Kühlflüssigkeitsring (30) tangential anliegende Fläche aufweist und an seinem der Strömung entgegengerichteten Ende vom Kühlflüssigkeitsring (30) weg gebogen ist, so dass es auf dem Kühlflüssigkeitsring aufschwimmt.

19. Reibungskupplung nach einem der Ansprüche 15 bis 18, **dadurch gekennzeichnet, dass** das den Kühlflüssigkeitsring (30) berührenden Ende der Leitung (50) im Betrieb nahezu senkrecht zur Oberfläche des rotierenden Kühlflüssigkeitsrings steht.

## Claims

1. Method for cooling a liquid-cooled friction clutch, in which method the cooling liquid is supplied radially within plates (18, 20, 26, 28) which can be placed in torque-transmitting frictional engagement, is discharged radially outside the plates, and after flowing through a return flow path (36, 40, 41) is at least partially supplied again radially within the plates,
with
at least a part of the cooling liquid which is discharged radially outside the plates (18, 20, 26, 28) being supplied again radially within the plates without having flowed through a pump which increases the pressure level of said cooling liquid, in that the volume flow of the cooling liquid which is discharged radially outside the plates (18, 20, 26, 28) and which is supplied again radially inside the plates is regulated by force equilibrium between a force exerted by a cooling liquid ring (30) which rotates outside the plates on a scoop pipe (34) which dips into the cooling liquid ring and a force which preloads the scoop pipe so as to increase its depth of immersion.

2. Method according to Claim 1, **characterized in that** the cooling liquid which is supplied again without having flowed through a pressure-level-increasing pump is extracted above the plates from a cooling liquid ring (30), which rotates radially outside the plates (18, 20, 26, 28).

3. Method according to either of Claims 1 and 2, **characterized in that** additional cooling liquid is supplied radially within the plates (18, 20, 26, 28), which cooling liquid is conveyed by the cooling liquid flowing along the return flow path (36, 40, 41).

4. Method according to one of Claims 1 to 3, **characterized in that** a vacuum is generated at a contact point between a cooling liquid ring (30) which rotates within a clutch housing (12) and a component (48) which is substantially immovable in the circumferential direction, by means of which vacuum cooling liquid is sucked in and supplied to the cooling liquid ring.

5. Liquid-cooled friction clutch comprising
at least one plate (18, 20) which is rotationally fixedly connected to a drive input shaft (10), at least one plate (26, 28) which is rotationally fixedly connected to a drive output shaft (22, 24), which plates can be pressed into contact with one another and are arranged within a clutch housing (12) which is rotationally fixedly connected to the drive input shaft,
a cooling liquid return line (36) which leads from a region radially outside the plates to a region radially within the plates and which returns cooling liquid, after it has flowed radially along the plates, from the radially outer region into the radially inner region,
with
an end region of the return line (36) being formed as a scoop pipe (34) with an inlet opening which dips, radially outside the plates (18, 20, 26, 28), into a cooling liquid ring (30) which rotates with the clutch housing (12), which inlet opening returns the cooling liquid into the region radially within the plates without said cooling liquid having flowed through a pump driven by external force, **characterized in that** the scoop pipe (34) can be moved in such a way as to change its depth of immersion into the cooling liquid ring (30).

6. Friction clutch according to Claim 5, **characterized in that** the inlet opening of the scoop pipe (34) is arranged approximately vertically above the centre of the clutch.

7. Friction clutch according to either of Claims 5 and 6, **characterized in that** the scoop pipe (34) is pivotable about an axis (45) which is arranged eccentrically with respect to the axis of the cooling liquid ring (30).

8. Friction clutch according to Claim 5 or 7, **characterized in that**, to pivot the scoop pipe (34), an actuator (43) is provided which is connected to the scoop pipe with the interposition of a spring (58).

9. Friction clutch according to Claim 8, **characterized in that** the force which can be imparted by the actuator (43) to the scoop pipe (34) counter to the flow direction of the cooling liquid ring (30) is adjustable.

10. Friction clutch according to one of Claims 5 to 8, **characterized in that** the scoop pipe (34) is provided with a vane (68) which is directed radially inwards counter to the flow direction of the cooling liquid ring (30).

11. Friction clutch according to one of Claims 5 to 10, **characterized in that** the cooling liquid ring (30) co-rotates in a radially inwardly open annular channel (14) which rotates with the clutch housing (12).

12. Friction clutch according to Claim 11, **characterized in that** cooling liquid which overflows from the channel (14) is conducted by at least one blade (16) arranged radially outside the channel to a cooling liquid reservoir (12) situated outside the clutch.

13. Friction clutch according to one of Claims 5 to 12, **characterized in that** the return line (36) leads through a temperature-control device (40) for controlling the temperature of the liquid.

14. Friction clutch according to one of Claims 5 to 13, **characterized in that** the return line (36) leads through a suction jet pump (41), the suction inlet of which is connected to a cooling liquid reservoir (52).

15. Friction clutch according to one of Claims 5 to 14, **characterized in that** a flow-sensing component (48) bears against a radially inner surface of the cooling liquid ring (30), which flow-sensing component (48) is formed with an opening (66) to which is connected a refilling line (50) which is connected to a liquid reservoir (52) arranged outside the clutch.

16. Friction clutch according to Claim 15, **characterized in that** the refilling line (50) runs in an inverted "U" shape between the opening (66) formed in the flow-sensing component (48) and the liquid reservoir (52).

17. Friction clutch according to Claim 15 or 16, **characterized in that** the flow-sensing component (48) is pre-loaded in the direction of the cooling liquid ring (30), floats on the surface thereof and does not sink into it.

18. Friction clutch according to one of Claims 15 to 17, **characterized in that** the flow-sensing component (48) has a surface which bears tangentially against the cooling liquid ring (30) and which, at its end directed counter to the flow, is curved away from the cooling liquid ring (30) such that it floats on the cooling liquid ring.

19. Friction clutch according to one of Claims 15 to 18, **characterized in that** that end of the line (50) which makes contact with the cooling liquid ring (30) is virtually perpendicular to the surface of the rotating cooling liquid ring during operation.

## Revendications

1. Procédé de refroidissement d'un embrayage à friction refroidi par un liquide, procédé dans lequel le liquide de refroidissement est amené radialement à l'intérieur de lamelles (18, 20, 26, 28) pouvant être mises en engagement à friction pour transmettre un couple de rotation, évacué radialement à l'extérieur des lamelles et de nouveau au moins en partie ramené radialement à l'intérieur des lamelles après avoir parcouru un chemin de retour (36, 40, 41), dans lequel au moins une partie du liquide de refroidissement évacué radialement à l'extérieur des lamelles (18, 20, 26, 28) est de nouveau ramenée radialement à l'intérieur des lamelles sans traverser une pompe augmentant le niveau de pression de ce liquide de refroidissement, **caractérisé en ce que** le courant volumique du liquide de refroidissement évacué radialement à l'extérieur des lamelles (18, 20, 26, 28) et de nouveau ramené radialement à l'intérieur des lamelles est régulé par un équilibre des forces entre une force, qui est exercée par un anneau de liquide de refroidissement (30) tournant à l'extérieur des lamelles sur un tube de prélèvement (34) plongeant dans l'anneau de liquide de refroidissement, et une force qui précontraint le tube de prélèvement dans le sens d'un accroissement de sa profondeur de pénétration.

2. Procédé selon la revendication 1, **caractérisé en ce que** le liquide de refroidissement de nouveau ramené sans traverser une pompe augmentant le niveau de pression est prélevé au-dessus des lamelles dans un anneau de liquide de refroidissement (30) tournant radialement à l'extérieur des lamelles (18, 20, 26, 28).

3. Procédé selon l'une quelconque des revendications 1 ou 2, **caractérisé en ce que** l'on amène radialement à l'intérieur des lamelles (18, 20, 26, 28) du liquide de refroidissement additionnel, qui est transporté par le liquide de refroidissement circulant le long du chemin de retour (36, 40, 41).

4. Procédé selon l'une quelconque des revendications 1 à 3, **caractérisé en ce que** l'on produit, en un point de contact entre un anneau de liquide de refroidissement (30) tournant à l'intérieur d'un boîtier d'embrayage (12) et une pièce essentiellement stationnaire en direction périphérique (48), une dépression par laquelle du liquide de refroidissement est aspiré et fourni à l'anneau de liquide de refroidissement.

5. Embrayage à friction refroidi par un liquide, comportant au moins une lamelle (18, 20) assemblée solidairement en rotation à un arbre d'entraînement (10), au moins une lamelle (26, 28) assemblée solidairement en rotation à un arbre de sortie (22, 24), lamelles qui peuvent être pressées en appui mutuel et qui sont disposées à l'intérieur d'un boîtier d'embrayage (12) assemblé solidairement en rotation à l'arbre d'entraînement, une conduite de retour de liquide de refroidissement (36), qui conduit d'une région située radialement à l'extérieur des lamelles jusqu'à une région située radialement à l'intérieur des lamelles et qui ramène du liquide de refroidissement de la région radialement extérieure dans la région radialement intérieure après qu'il se soit écoulé radialement le long des lamelles, dans lequel une région d'extrémité de la conduite de retour (36) se présente sous la forme d'un tube de prélèvement (34) avec une ouverture d'entrée, qui plonge dans un anneau de liquide de refroidissement (30) tournant avec le boîtier d'embrayage (12) radialement à l'extérieur des lamelles (18, 20, 26, 28) et qui ramène du liquide de refroidissement dans la région située radialement à l'intérieur des lamelles sans qu'il ait traversé une pompe entraînée par une force extérieure, **caractérisé en ce que** le tube de prélèvement (34) peut être déplacé de telle manière que sa profondeur de pénétration dans l'anneau de liquide de refroidissement (30) varie.

6. Embrayage à friction selon la revendication 5, **caractérisé en ce que** l'ouverture d'entrée du tube de prélèvement (34) est disposée environ à la verticale au-dessus du centre de l'embrayage.

7. Embrayage à friction selon l'une quelconque des revendications 5 ou 6, **caractérisé en ce que** le tube de prélèvement (34) est apte à pivoter autour d'un axe (45) disposé en position excentrique par rapport à l'axe de l'anneau de liquide de refroidissement (30).

8. Embrayage à friction selon l'une quelconque des revendications 5 ou 7, **caractérisé en ce qu'**il est prévu pour le pivotement du tube de prélèvement (34) un actionneur (43), qui est relié au tube de prélèvement par l'intermédiaire d'un ressort (58).

9. Embrayage à friction selon la revendication 8, **caractérisé en ce que** la force pouvant être exercée par l'actionneur (43) sur le tube de prélèvement (34) contre la direction d'écoulement de l'anneau de liquide de refroidissement (30) est réglable.

10. Embrayage à friction selon l'une quelconque des revendications 5 à 8, **caractérisé en ce que** le tube de prélèvement (34) est muni d'une aile (68) dirigée radialement vers l'intérieur contre la direction d'écoulement de l'anneau de liquide de refroidissement (30).

11. Embrayage à friction selon l'une quelconque des revendications 5 à 10, **caractérisé en ce que** l'anneau de liquide de refroidissement (30) tourne dans une rigole annulaire (14) ouverte radialement vers l'intérieur et tournant avec le boîtier d'embrayage (12).

12. Embrayage à friction selon la revendication 11, **caractérisé en ce que** le liquide de refroidissement débordant hors de la rigole (14) est conduit par au moins une aube (16) disposée radialement à l'extérieur de la rigole à un réservoir de liquide de refroidissement (12) se trouvant à l'extérieur de l'embrayage.

13. Embrayage à friction selon l'une quelconque des revendications 5 à 12, **caractérisé en ce que** la conduite de retour (36) conduit à travers un système d'équilibrage de la température (40) pour équilibrer la température du liquide.

14. Embrayage à friction selon l'une quelconque des revendications 5 à 13, **caractérisé en ce que** la conduite de retour (36) conduit à travers un éjecteur (41), dont l'entrée aspirante est reliée à un réservoir de liquide de refroidissement (52).

15. Embrayage à friction selon l'une quelconque des revendications 5 à 14, **caractérisé en ce qu'**une pièce de sondage de l'écoulement (48) est appliquée sur une surface radialement intérieure de l'anneau de liquide de refroidissement (30), pièce qui est réalisée avec une ouverture (66) à laquelle est raccordée une conduite de remplissage (50) raccordée à un réservoir de liquide de refroidissement (52) disposé à l'extérieur de l'embrayage.

16. Embrayage à friction selon la revendication 15, **caractérisé en ce que** la conduite de remplissage (50) s'étend en forme de U inversé entre l'ouverture (66) pratiquée dans la pièce de sondage de l'écoulement (48) et le réservoir de liquide de refroidissement (52).

17. Embrayage à friction selon l'une quelconque des revendications 15 ou 16, **caractérisé en ce que** la pièce de sondage de l'écoulement (48) est précontrainte en direction de l'anneau de liquide de refroidissement (30), de telle manière qu'elle flotte sur la surface de celui-ci mais ne plonge pas dans celui-ci.

18. Embrayage à friction selon l'une quelconque des revendications 15 à 17, **caractérisé en ce que** la pièce de sondage de l'écoulement (48) présente une surface s'appliquant tangentiellement à l'anneau de liquide de refroidissement (30) et s'écarte en courbe de l'anneau de liquide de refroidissement (30) à son extrémité orientée à l'opposé de l'écoulement, de telle manière qu'elle flotte sur l'anneau de liquide de refroidissement.

19. Embrayage à friction selon l'une quelconque des revendications 15 à 18, **caractérisé en ce que** l'extrémité de la conduite (50) touchant l'anneau de liquide de refroidissement (30) est, en fonctionnement, pratiquement perpendiculaire à la surface de l'anneau de liquide de refroidissement tournant.
